# EUROPÄISCHE PATENTANMELDUNG

(11) **EP 4 174 718 A1**
(43) Veröffentlichungstag der Anmeldung: **03.05.2023**
(21) Anmeldenummer: 22203658.4
(22) Anmeldetag: 25.10.2022
(51) Int. Cl.: G06K 17/00, G06K 13/07

(54) **VORRICHTUNG ZUM CODIEREN VON AUF BÖGEN ANGEORDNETEN RFID-ETIKETTEN**

(30) Priorität: 02.11.2021 DE 102021128488
(71) Anmelder: Renfordt, Jochen, 58097 Hagen (DE); Wierichs, Wilhelm, 52457 Aldenhoven (DE)
(72) Erfinder: Renfordt, Jochen, 58097 Hagen (DE); Wierichs, Wilhelm, 52457 Aldenhoven (DE)
(74) Vertreter: Patentanwälte Dörner & Kötter PartG mbB

(57) **Zusammenfassung**

Die Erfindung betrifft eine Vorrichtung zum Codieren von auf Bögen angeordneten RFID-Etiketten mit mindestens zwei Etiketten-Bahnen umfassend eine Zuführeinrichtung (1) und eine Ablageeinrichtung (2), wobei die Zuführeinrichtung (1) eine Einzelblattzuführung aufweist, wobei zwischen der Zuführeinrichtung (1) und der Ablageeinrichtung (2) drei Transporteinrichtungen (3) und zwei Codiereinheiten (4) vorgesehen sind, die insgesamt mindestens zwei Öffnungen (9) aufweisen, unter denen Antennen angeordnet sind, wobei jede Öffnung (9) mit der darin angeordneten Antenne in Transportrichtung (x) beabstandet zu der benachbarten Öffnung (9) mit der darin angeordneten Antenne angeordnet ist.

## Beschreibung

Die Erfindung betrifft eine Vorrichtung zum Codieren von auf Bögen angeordneten RFID-Etiketten mit mindestens zwei Etiketten-Bahnen umfassend eine Zuführeinrichtung und eine Ablageeinrichtung, wobei die Zuführeinrichtung eine Einzelblattzuführung aufweist, wobei zwischen der Zuführeinrichtung und der Ablageeinrichtung eine Transporteinrichtung und eine Codiereinheit vorgesehen ist, die mindestens zwei Öffnungen aufweist, in denen Antennen angeordnet sind.

RFID steht für Radiofrequenz-Identifikation. Diese ermöglicht das berührungslose Speichern und Auslesen von Daten. Sie dient zum automatische Identifizieren und Lokalisieren von Gegenständen. Durch die Radiofrequenz-Identifikation können mit Hilfe von elektromagnetischen Wellen Daten über einen Transponder ausgetauscht werden. Ein Transponder stellt ein Funk-Kommunikationsgerät dar, welches eingehende Signale aufnimmt und automatisch beantwortet bzw. weiterleitet. Der Transponder kann sich so mit anderen RFID-fähigen Geräten, wie bspw. RFID-Kartenlesegeräten oder auch Smartphones austauschen.

Bei RFID-Etiketten im Sinne der vorliegenden Erfindung handelt es sich sowohl um selbstklebende Aufkleber, als auch um Hängeetiketten, sog. Hang-Tags. In den Etiketten ist eine RFID-Antenne und ein RFID-Speicherchip eingebaut. Sie bilden zusammen den Transponder. RFID-Etiketten eignen sich insbesondere zum Anbringen an Verpackungen oder Waren zu deren Kennzeichnung.

Der RFID-Speicherchip ist ein Halbleiterplättchen mit aufgebrachtem integriertem Schaltkreis. In dem Speicher des Schaltkreises können Informationen gespeichert werden. Jeder RFID-Chip bekommt vom Hersteller eine weltweit einmalige Nummer eingeprägt: die sog. Transponder ID (TID). Diese TID ist nicht veränderbar. Alle anderen Speicherbereiche der Chips sind beschreibbar und können verriegelt, mit Passwort geschützt und auch unbrauchbar gemacht werden.

Bei RFID-Etiketten werden die relevanten Daten auf dem Speicherchip, der mit der Antenne verbunden ist, gespeichert. Die Speicherung bzw. das Codieren oder Beschreiben der Speicherchips erfolgt mittels elektromagnetischer Wellen im HF- oder UHF-Frequenzbereich (HF oder UHF steht für "High Frequency" oder "Ultra High Frequency"). Die gespeicherten Informationen können durch elektromagnetische Wellen zu einem Lesegerät übertragen werden. Da Radiofrequenzwellen in der Lage sind, Materialien zu durchdringen, können die Transponder geschützt hinter Klebefolien aufgebracht werden. Ein Sichtkontakt zum Lesegerät ist nicht erforderlich.

Bei RFID-Etiketten wird der Speicherchip in ein Etikett integriert, das selbstklebend sein kann und einfach am Objekt befestigt werden kann, zum Beispiel an der Verpackung von Waren. Bei solchen selbstklebenden Etiketten ist der Transponder zwischen einem Trägermaterial und einer Klebefolie angeordnet. Alternativ kann das RFID-Etikett als Hang-Tag auch bspw. mit Hilfe eines Fadens an die Ware angehängt werden. Bei dieser Art Etiketten ist der Transponder zwischen Karton- oder stabileren Papierschichten angeordnet.

Bei den RFID-Etiketten der hier betrachteten Art handelt es sich um sog. passive RFID-Etiketten. Anders als aktive RFID-Transponder, enthalten passive Transponder keine Energiequelle. Dem Etikett muss daher bei der Abfrage Energie zugeführt werden. Dies erfolgt beim Auslesen über das jeweilige Lesegerät. Dabei wird gemeinsam mit der Anfrage an den Speicherchip zugleich Energie in Form elektromagnetischer Wellen an den Speicherchip übertragen, die die Aktivierung und Datenübertragung ermöglicht.

Bei den RFID-Etiketten kann es sich sowohl um solche handeln, die nur ausgelesen und nicht verändert werden können, als auch um solche, die ein Beschreiben und mehrfaches Auslesen ermöglichen. Im erstgenannten Fall programmiert der Hersteller des Etiketts die Daten ein, die dann nicht mehr veränderbar sind. Diese Lösung ist die kostengünstigste; bei ihr lassen sich die Daten jedoch nicht individuell anpassen
Dagegen erlauben Etiketten für einfaches Beschreiben und mehrfaches Auslesen dem Benutzer, die durch den Hersteller eingeschriebenen Daten abzuändern und zu überschreiben. Dies ist jedoch nur einmal möglich. Er kann aber unbegrenzt ausgelesen werden. Etiketten für wiederholtes Beschreiben lassen wiederholtes Verändern der im Speicherchip gespeicherten Informationen und unbegrenztes Auslesen zu.

RFID-Etiketten werden üblicherweise auf Rollen als Endlosbahnen hergestellt. Die Etiketten sind dabei in Abrollrichtung hintereinander angeordnet. Die Etiketten werden bei dieser Art der Anordnung auf dem Trägermaterial einzeln und nacheinander mit den gewünschten Daten beschrieben. Dieses Vorgehen ist bei üblichen Materialgewichten (Grammaturen) von ca. 80 bis 90 g/m² zuverlässig möglich.

Es besteht aber aus verschiedenen Gründen der Wunsch nach RFID-Etiketten mit höheren Grammaturen, bspw. von 300 bis 400 g/m². Bei solchen Grammaturen tritt allerdings das Problem auf, dass sich diese zwar zu Rollen aufwickeln lassen; sie kehren aber nach dem Abwickeln nicht in eine ebene Form zurück. Vielmehr behalten sie nach dem Abwickeln eine gekrümmte Form, die ein zuverlässiges Aufkleben zumindest erschwert. Auch lassen sich die gebogenen Etiketten nicht zuverlässig Codieren. Aus diesem Grund werden RFID-Etiketten mit solchen Grammaturen auf Bögen angeordnet und codiert. Auf den Bögen sind dann mehrere Bahnen von Etiketten angeordnet.

Beim Beschreiben bzw. Codieren der Speicherchips von auf Bögen mehrbahnig angeordneten Etiketten kommt es jedoch zu Problemen. Dies ist zum einen auf die Fördereinrichtungen zurück zu führen, die zum Transport der Bögen erforderlich sind. Hierzu bedarf es einer Rollenführung, um die Bögen zuverlässig über die Antennen zu führen, mit denen die Codierung der Speicherchips erfolgt. Die Rollenführung ist dabei oberhalb der Bögen und damit oberhalb der Antennen angeordnet. Dadurch kann es zu Reflexionen der von den Antennen ausgesandten elektromagnetischen Wellen kommen, die das Codieren der Speicherchips stören. Auch die Anordnung der Antennen in einer Reihe nebeneinander kann zu einer fehlerhaften Codierung führen. Es kann zu einem sog. Übersprechen - auch "Cross-Talking" genannt - kommen, was zu falsch programmierten Etiketten führt. In einem solchen Fall stimmen dann die tatsächlich im Speicherchip gespeicherten Informationen nicht mit den gewünschten Informationen überein.

Hier will die Erfindung Abhilfe schaffen. Der Erfindung liegt die Aufgabe zugrunde, eine Vorrichtung zum Codieren von mehrbahnig auf Bögen angeordneten RFID-Etiketten zu schaffen, die eine zuverlässige Codierung der RFID-Etiketten ermöglicht und ein Übersprechen vermeidet. Gemäß der Erfindung wird diese Aufgabe mit den Merkmalen des Patentanspruchs 1 gelöst.

Mit der Erfindung ist eine Vorrichtung zum Codieren von mehrbahnig auf Bögen angeordneten RFID-Etiketten geschaffen, die eine zuverlässige Codierung der RFID-Etiketten ermöglicht und ein Übersprechen vermeidet. Durch die erfindungsgemäß geschaffenen Abstände zwischen den Öffnungen mit den Antennen ist einem Übersprechen wirksam vorgebeugt.

In Weiterbildung der Erfindung sind die Antennen auf der der Transportebene abgewandten Seite in einem Abstand zur Transportebene angebracht. Der Abstand zur Öffnung in der Transportebene bewirkt eine Minderung der Streuung der von den Antennen ausgesandten Strahlung. Diese Maßnahme führt ebenfalls zu einer Reduzierung des Risikos eines Übersprechens.

Vorteilhaft sind die Antriebseinheiten unter einem Anstellwinkel zur Transportrichtung angerordnet. Der Anstellwinkel bewirkt, dass die Bögen mit den RFID-Etiketten beim Transport zu einer Seite gelenkt werden, wodurch sie sich immer in der vorgesehenen Transportbahn bewegen. Dadurch ist zuverlässig gewährleistet, dass die Etiketten immer exakt über den Antennen zum Beschreiben geführt werden.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung der Draufsicht einer erfindungs-gemäßen Vorrichtung;
- Figur 2: die perspektivische Darstellung der in Figur 1 dargestellten Vorrichtung;
- Figur 3: die schematische Darstellung der Draufsicht einer erfindungsgemäßen Vorrichtung in anderer Ausgestaltung;
- Figur 4: die beispielhafte Darstellung eines mit RFID-Etiketten versehenen Bogens.

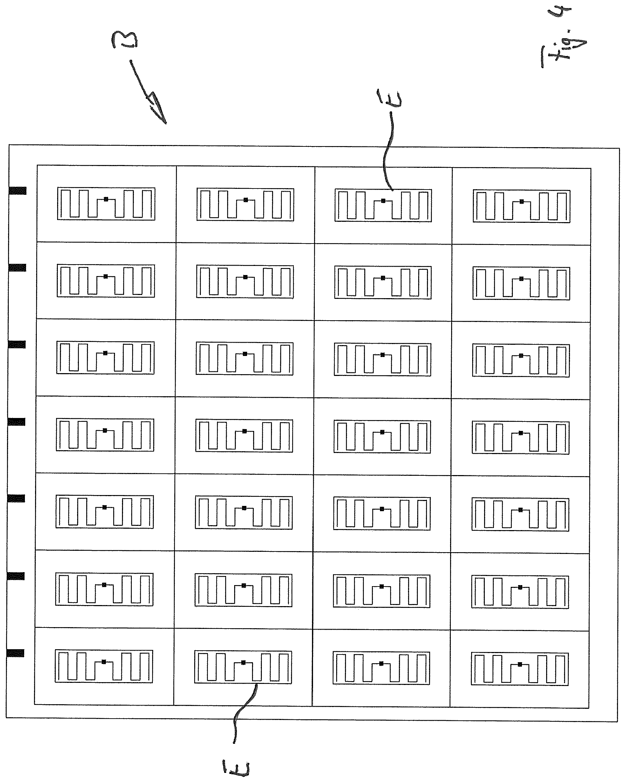

Die in den Ausführungsbeispielen gezeigten Vorrichtungen zum Codieren von auf Bögen B angeordneten RFID-Etiketten E sind zum Codieren von Bögen im Format DIN A3 mit vier Etiketten-Bahnen vorgesehen (vgl. Figur 4). Auf dem Bogen B sind im Ausführungsbeispiel 28 RFID-Etiketten E angeordnet. Erkennbar sind vier Etiketten quer zur Transportrichtung nebeneinander und sieben Etiketten in Transportrichtung hintereinander angeordnet. In Abwandlung des Ausführungsbeispiels können die Bögen auch mit mehr oder weniger Etiketten-bahnen und mit mehr oder weniger Etiketten versehen sein.

Die erfindungsgemäße Vorrichtung zum Codieren umfasst eine Zuführeinrichtung 1 und eine Ablageeinrichtung 2. Zwischen der Zuführeinrichtung 1 und der Ablageeinrichtung 2 ist eine Transporteinrichtung 3 und mindestens eine Codiereinheit 4 vorgesehen. In der Zuführeinrichtung 1 sind eine Vielzahl von Bögen B übereinander gestapelt positionierbar. Die Zuführeinrichtung 1 weist eine - nicht dargestellte - Einzelblattzuführung auf, welche mit der Transporteinrichtung 3 in Verbindung steht.

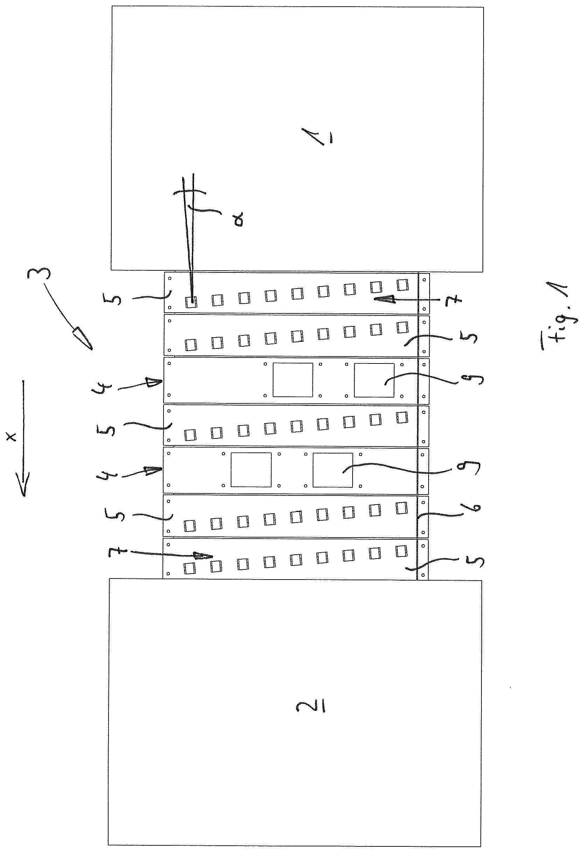

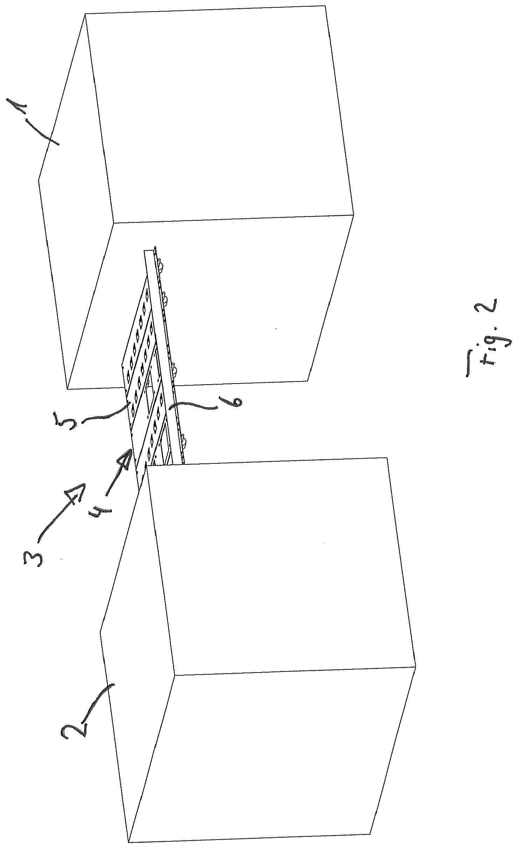

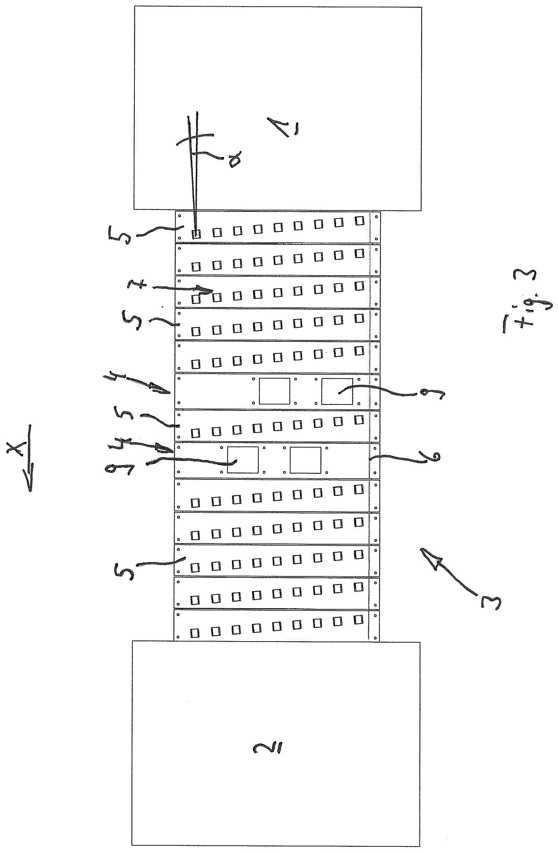

Die Transporteinrichtung 3 besteht aus einer Anzahl von Blechen 5, die in Transportrichtung x hintereinander angeordnet sind. Die Anzahl an Blechen 5 kann bedarfsabhängig variieren, um sowohl ein Übersprechen zu verhindern als auch der Anordnung der RFID-Etiketten E auf dem Bogen B zu genügen. Im Ausführungsbespiel nach den Figuren 1 und 2 sind sieben Bleche 5 vorgesehen; im Ausführungsbeispiel nach Figur 3 sind dreizehn Bleche 5 vorgesehen. Die Bleche 5 der Transporteinrichtung 3 sind lösbar miteinander verbunden und auf einem - nicht dargestellten - Rahmen angeordnet. Die Bleche 5 sind in magnetisierbarem Metall ausgeführt. An mindestens einer Seite der Transporteinrichtung 3 ist in Transportrichtung x gerichtet eine Seitenführung 6 vorgesehen, die über die Bleche 5 nach oben hervorragt.

Die Transporteinrichtung 3 umfasst eine Anzahl Antriebseinheiten 7. Im Ausführungsbeispiel sind die Antriebseinheiten 7 von Antriebsrollen gebildet, die durch Öffnungen in den Blechen 5 hervorragen, und zwar im Ausführungsbeispiel um etwa 1 mm. Die Antriebsrollen sind dabei synchron gesteuert.

Die Antriebsrollen sind auf Segmente aufgeteilt, die identisch aufgebaut sind und austauschbar sind. Die Antriebsrollen sind auf der der Transportebene abgewandten (Unter-)Seite der Bleche 5 angeordnet. Auf der Unterseite der Bleche sind die Antriebsrollen eines Blechs jeweils mit einem Kanal abgedeckt. An mindestens einer Stirnseite der Kanäle ist ein Ventilator angeordnet, der Luft aus dem Kanal absaugt. Dadurch entsteht an den Öffnungen, durch die die Antriebsrollen hervorragen, ein Unterdruck, wodurch beim Transport ein Abheben der transportierten Bögen B verhindert ist. Dadurch ist ein sicherer Transport der Bögen gewährleistet und eine fehlerfreie Codierung der Etiketten unterstützt.

Die Antriebseinheiten 7 sind unter einem Anstellwinkel α zur Transportrichtung x angerordnet. Die Ausrichtung der Antriebseinheiten 7 hat zur Folge, dass die transportierten Bögen immer nach außen in Richtung der Seitenführung 6 geleitet werden. Die Bögen liegen folglich zuverlässig an der Seitenführung an. Zudem ist die Transporteinrichtung 3 mit einer - nicht dargestellten - Saugeinrichtung versehen.

Die Codiereinheiten 4 weisen im Ausführungsbeispiel insgesamt vier Öffnungen 9 auf, in denen - nicht dargestellte - Antennen angeordnet sind. Die Anzahl an Antennen ergibt sich aus der Anzahl an Etikett-Bahnen, die auf den zu codierenden Bögen angeordnet sind. Da im Ausführungsbeispiel vier Bahnen von Etiketten auf dem Bogen angeordnet sind, sind auch vier Öffnungen 9 mit darin angeordneten Antennen vorgesehen. Die Öffnungen 9 sind derart angeordnet, dass auf jeder Etikett-Bahn eine Öffnung 9 und folglich eine Antenne positioniert ist. Gleichzeitig sind die Öffnungen 9 mit ihren darin angeordneten Antennen in Transportrichtung x jeweils beabstandet zu der Öffnung 9 mit der darin angeordneten Antenne der benachbarten Bahn angeordnet. Im Ausführungsbeispiel ist der Abstand der Öffnungen durch ein zwischen den Öffnungen angeordnetes Blech 5 mit Antriebseinheit 7 hervorgerufen.

Zur Codierung der auf den Bögen vorgesehenen RFID-Etiketten wird der jeweils oberste Bogen von dem in der Zuführeinrichtung 1 angeordneten Stapel aus Bögen vom Einzelblatteinzug der Transporteinrichtung 3 zugeführt. Mit Hilfe der Antriebseinheiten 7 wird der Bogen dann an der Seitenführung 6 entlang über die Bleche 5 und die Codiereinheiten 4 geführt. Bei Überfahren der Öffnungen 9 der Codiereinheiten 4 werden die Codierer ausgelöst und beschreiben bzw. codieren die in den Etiketten befindlichen RFID-Speicherchips in an sich bekannter Weise. Nach Passieren Transporteinrichtung 3 wird der jeweilige Bogen in der Ablageeinrichtung 2 abgelegt.

Mit der erfindungsgemäßen Vorrichtung ist eine zuverlässige Codierung der auf den Bögen angeordneten RFID-Etiketten ohne Übersprechen (Cross-Talking) möglich. Dies ist zum einen dadurch bewirkt, dass die Antennen jeweils in einem Abstand zur Transportebene befestigt sind.

Zudem ist die Gefahr einer Verfälschung der Codierung durch reflektierte Strahlung ausgeschlossen. Dies ist durch die Verlagerung des Antriebs unmittelbar in die Transportebene bewirkt. Eine Anordnung von Bauteilen über der Vorrichtung, wie dies aus dem Stand der Technik bspw. durch Vorsehen der Antriebseinheit oberhalb der Codiereinheiten bekannt ist, ist daher nicht notwendig. Folglich kann von den Codierern ausgesandte Strahlung auch nicht von solchen Bauteilen reflektiert werden und unkontrolliert auf die RFID-Etiketten einwirken.

Darüber hinaus ist durch die versetzte Anordnung der Antennen für die einzelnen Etikettenbahnen eine Vorkehrung getroffen, um ein Übersprechen beim Codieren zu verhindern. Durch diese Anordnung werden die Abstände zwischen den Öffnungen der Codierer ausreichend groß gehalten.

## Patentansprüche

1. Vorrichtung zum Codieren von auf Bögen (B) angeordneten RFID-Etiketten (E) mit mindestens zwei Etiketten-Bahnen umfassend eine Zuführeinrichtung (1) und eine Ablageeinrichtung (2), wobei die Zuführeinrichtung (1) eine Einzelblattzuführung aufweist, wobei zwischen der Zuführeinrichtung (1) und der Ablageeinrichtung (2) eine Transporteinrichtung (3) und eine Codiereinheit (4) vorgesehen ist, die mindestens zwei Öffnungen (9) aufweist, in denen Antennen angeordnet sind, **dadurch gekennzeichnet, dass** mindestens eine Öffnung (9) mit der darin angeordneten Antenne in Transportrichtung (x) beabstandet zu der benachbarten Öffnung (9) mit der darin angeordneten Antenne angeordnet ist.

2. Vorrichtung nach Anspruch 1, **dadurch gekennzeichnet, dass** vier Öffnungen (9) vorgesehen sind, in denen jeweils eine Antenne angeordnet ist.

3. Vorrichtung nach Anspruch 1 oder 2, **dadurch gekennzeichnet, dass** die Antennen auf ihrer der Transportebene abgewandten Seite in einem Abstand zur Transportebene angebracht sind.

4. Vorrichtung nach einem der vorgenannten Ansprüche, **dadurch gekennzeichnet, dass** die Antennen unterhalb der Transportebene mit Magneten befestigt sind.

5. Vorrichtung nach einem der vorgenannten Ansprüche, **dadurch gekennzeichnet, dass** die Transporteinrichtung (3) mindestens fünf Antriebseinheiten (7) umfasst

6. Vorrichtung nach Anspruch 5, **dadurch gekennzeichnet, dass** die die Antriebseinheiten (7) von Antriebsrollen gebildet sind.

7. Vorrichtung nach einem der vorgenannten Ansprüche, **dadurch gekennzeichnet, dass** die Antriebseinheiten (7) unter einem Anstellwinkel (α) zur Transportrichtung (x) angerordnet sind.

8. Vorrichtung nach einem der vorgenannten Ansprüche, **dadurch gekennzeichnet, dass** die Transporteinrichtung (3) aus mindestens zwei Blechen (5) besteht, die in Transportrichtung (x) hintereinander angeordnet sind.
